# FASCICULE DE BREVET EUROPEEN

(11) **EP 2 911 900 B1**
(45) Date de publication et mention de la délivrance du brevet: **15.01.2020**
(21) Numéro de dépôt: 13779852.6
(22) Date de dépôt: 22.10.2013
(51) Int. Cl.: B60H 1/24, B60H 1/26, F01P 7/10, B60K 11/08

(54) **DISPOSITIF D'OBTURATION D'ORIFICE DE FACE AVANT DE VEHICULE AUTOMOBILE, ET FACE AVANT CORRESPONDANT**
VORRICHTUNG ZUM VERSCHLIESSEN EINER ÖFFNUNG AUF EINER FAHRZEUGVORDERSEITE UND ENTSPRECHENDE FAHRZEUGVORDERSEITE
DEVICE FOR SEALING AN OPENING ON A FRONT FACE OF A MOTOR VEHICLE, AND CORRESPONDING FRONT FACE

(30) Priorité: 26.10.2012 FR 1260266
(43) Date de publication de la demande: 02.09.2015
(73) Titulaire: Valeo Systemes Thermiques, 78320 Le Mesnil Saint Denis (FR)
(72) Inventeur: THULLIER, Christophe, F-78180 Montigny Le Bretonneux (FR)
(74) Mandataire: Metz, Gaëlle
(86) Numéro de dépôt international: PCT/EP2013/072034
(87) Numéro de publication internationale: WO 2014/064083

(56) Documents cités:
- EP-A1- 0 500 430
- EP-A1- 2 371 602
- DE-A1- 3 836 374
- FR-A1- 2 757 619

## Description

La présente invention concerne les dispositifs d'obturation d'orifice et plus précisément un dispositif d'obturation d'orifice de face avant de véhicule automobile. L'invention concerne aussi une face avant de véhicule automobile comportant au moins un dispositif d'obturation.

Les faces avant de véhicules automobiles sont généralement composées de deux entrées d'air principales dites voie haute et voie basse séparées par un élément central cachant généralement une poutre pare-choc. Derrière cette poutre pare-choc sont généralement placés les échangeurs de chaleur du véhicule automobile, comme par exemple celui utilisé pour la climatisation de l'habitacle ou encore celui utilisé pour le refroidissement du moteur.

Il est également connu de disposer, dans le trajet d'air passant par les entrées d'air principales, un cadre support comportant une multiplicité de volets montés pivotants autours d'axes parallèles et propres à prendre une multiplicité de positions angulaires différentes, comprises entre une position d'ouverture et une position de fermeture, sous l'action de moyens de commande appropriés.

On obtient ainsi un dispositif d'obturation s'apparentant à une jalousie qui permet d'ajuster le débit d'air traversant les entrées d'air et arrivant aux échangeurs de chaleur et ainsi d'optimiser l'efficacité de ces échangeurs de chaleur en fonction des besoins. De plus, à grande vitesse, les volets en position de fermeture permettent de diminuer le coefficient de trainée du véhicule et ainsi d'améliorer son aérodynamisme.

Généralement, le dispositif permettant le passage d'une position de fermeture à une position d'ouverture des volets comporte un actionneur qui peut être mécanique, électrique ou encore pneumatique, faisant pivoter les volets de manière synchrone au moyen d'une bielle de pivotement. Le document EP 0 500 430 décrit un tel dispositif.

Cependant, cette configuration de face avant de véhicule peut laisser des zones de turbulences, entre le dispositif d'obturation et le ou les échangeurs de chaleur, qui sont faiblement alimentées en air frais entrant et donc où le ou les échangeurs de chaleurs sont moins efficaces. Ces zones sont notamment situées derrière l'élément central, entre le haut de la face avant et le haut du dispositif d'obturation ou encore entre le bas de la face avant et le bas du dispositif d'obturation.

Un des buts de l'invention est donc de remédier au moins partiellement aux inconvénients de l'art antérieur et de proposer un dispositif de volets et une face avant de véhicule automobile permettant de s'affranchir de ces zones de moindre circulation d'air.

Ainsi la présente invention concerne donc un dispositif d'obturation d'orifice en particulier pour entrée d'air de face avant de véhicule, comprenant :
- un cadre support,
- un premier volet et au moins un second volet à l'intérieur du cadre support, lesdits premier et au moins un second volets étant montés pivotant autour d'un axe de pivotement entre une position d'ouverture et une position de fermeture,

la distance entre l'axe de pivotement et l'axe de liaison du premier volet étant différente de la distance entre l'axe de pivotement et l'axe de liaison du au moins un second volet, de sorte qu'un déplacement de la bielle entraine une rotation d'angle différent pour les premier et au moins un second volets.

Il est ainsi possible, en contrôlant la distance entre l'axe de pivotement et l'axe de liaison, de choisir un angle de rotation du volet en position d'ouverture.

Selon un aspect de l'invention, la différence de distance entre l'axe de rotation et l'axe de liaison des premier et au moins un second volet est réalisée par une différence de longueur des bras de levier.

Selon un autre aspect de l'invention, les premier et au moins un second volet forment un ensemble de volets et les axes de liaison des volets situés aux extrémités dudit ensemble de volets sont en liaison avec la bielle au niveau d'encoches oblongues dans lesquelles lesdits axes de liaison peuvent coulisser.

Selon un autre aspect de l'invention, les encoches oblongues sont rectilignes et perpendiculaires au plan du volet dont elles guident l'axe de liaison, en position de fermeture.

Selon un autre aspect de l'invention, en position d'ouverture, les volets situés aux extrémités de l'ensemble de volets sont inclinés de sorte à rediriger l'air selon des directions divergentes par rapport à la direction d'un flux d'air entrant.

Selon un autre aspect de l'invention, l'ensemble de volets comporte au moins trois volets et en position d'ouverture, le au moins un volet central est parallèle à la direction d'un flux d'air entrant.

La présente invention concerne également une face avant de véhicule automobile comprenant au moins un dispositif d'obturation comprenant :
- un cadre support,
- un premier volet et au moins un second volet à l'intérieur du cadre support, lesdits premier et au moins un second volets étant monté pivotant autour d'un axe de pivotement entre une position d'ouverture et une position de fermeture,
- au moins une bielle de pivotement, lesdits premier et au moins un second volets étant reliés à ladite bielle au moyen d'un bras de levier ayant un axe de liaison avec ladite bielle,
la distance entre l'axe de pivotement et l'axe de liaison du premier volet étant différent de la distance entre l'axe de pivotement et l'axe de liaison du au moins un second volet de sorte qu'un déplacement de la bielle entraine une rotation d'angle différent pour les premier et au moins un second volets.

Il est ainsi possible de rediriger une partie de l'air entrant dans la face avant en jouant sur l'inclinaison de certain volets en position d'ouverture par modification de la distance entre leur axe de pivotement et leur axe de liaison et ainsi de le répartir sur toute la surface de la face avant, notamment afin amener l'air au niveau de zones faiblement alimentées en air
Selon un aspect de la face avant selon l'invention, ladite face avant comporte au moins deux entrées d'air principales séparées par un élément central et que chaque entrée d'air principale comporte un dispositif d'obturation.

D'autres caractéristiques et avantages de l'invention apparaîtront plus clairement à la lecture de la description suivante, donnée à titre d'exemple illustratif et non limitatif, et des dessins annexés parmi lesquels :
- les figures 1a et 1b montrent une représentation schématique en perspective d'un dispositif d'obturation en position de fermeture et d'ouverture,
- la figure 2 montre une représentation schématique en perspective en vue arrière d'un élément de commande d'un dispositif d'obturation,
- les figures 3a et 3b, montrent une représentation schématique en vue de côté d'un dispositif d'obturation en position de fermeture et d'ouverture,
- les figures 4a et 4b, montrent une représentation schématique en vue de côté d'une face avant de véhicule en position de fermeture et d'ouverture,

Les éléments identiques sur les différentes figures, portent les mêmes références.

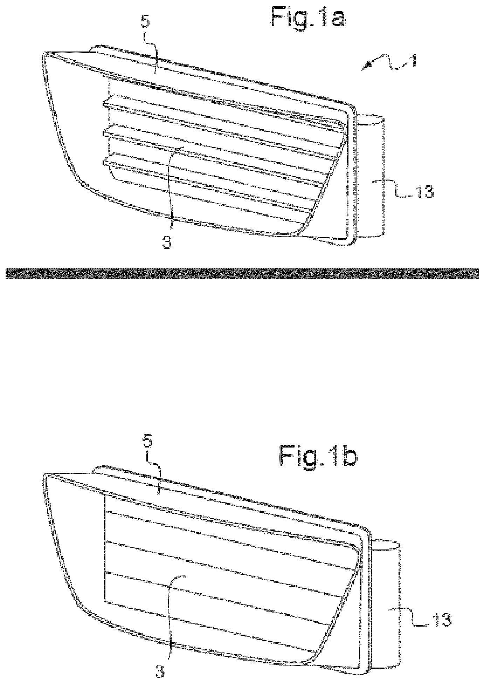

Les figures 1a et 1b montrent une représentation en perspective d'un dispositif d'obturation 1 généralement utilisé en face avant de véhicule automobile pour réguler l'entrée d'air.

Le dispositif d'obturation 1 comporte un cadre support 5 sur lequel sont installés un premier volet 3 et au moins un second volet 3 formant des rangs de volets 3 parallèles. La figure 1a montre lesdits premier et au moins un second volets 3 en position d'ouverture, où l'air peut passer au travers du dispositif d'obturation 1 et la figure 1b montre les mêmes premier et au moins un second volets 3 en position de fermeture, où l'air est bloqué.

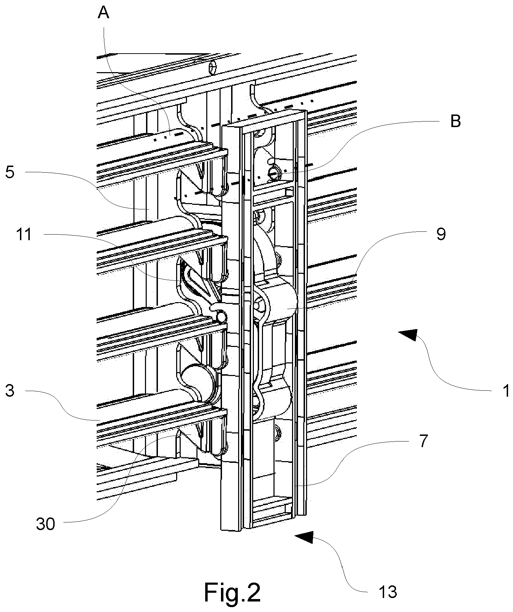

Les volets 3 sont reliés à un élément de commande 13 regroupant, comme le montre la figure 2, une bielle 7 de pivotement reliée aux volets 3 par bras de levier 30 perpendiculaire au volet 3, généralement venant de matière avec ledit volet 3 et portant un axe de liaison B avec la bielle 7. L'élément de commande 13 peut être situé sur un des cotés du dispositif d'obturation 1 comme montré sur les figures 1a et 1b, ou alors être situé dans le cadre support 5, séparant deux ensembles de premier et au moins un second volets 3 comme montré par la figure 2.

L'élément de commande 13 comporte également un actionneur 9. L'actionneur 9 peut être électrique, comme par exemple un moteur électrique, pneumatique, comme par exemple un vérin, ou encore manuel. L'actionneur 9 applique à la bielle 7 de pivotement un mouvement de translation, ici au moyen d'un levier 11.

Les volets 3 peuvent pivoter autour d'un axe de pivotement A défini par leur liaison avec le cadre support 5. L'axe de liaison B entre les volets 3 et la bielle 7, étant excentré par rapport à l'axe de pivotement A, un déplacement vers le haut ou vers le bas de la bielle 7 sous l'action de l'actionneur 9 entraine le pivotement des volets autour de l'axe de pivotement A et donc le passage des volets 3 en position de fermeture, comme montré à la figure 1b, ou en position d'ouverture, comme montré à la figure 1a. Tous les volets 3 étant reliés à la même bielle 7 de pivotement, le passage d'une position d'ouverture à une position de fermeture est synchrone pour tous les volets 3.

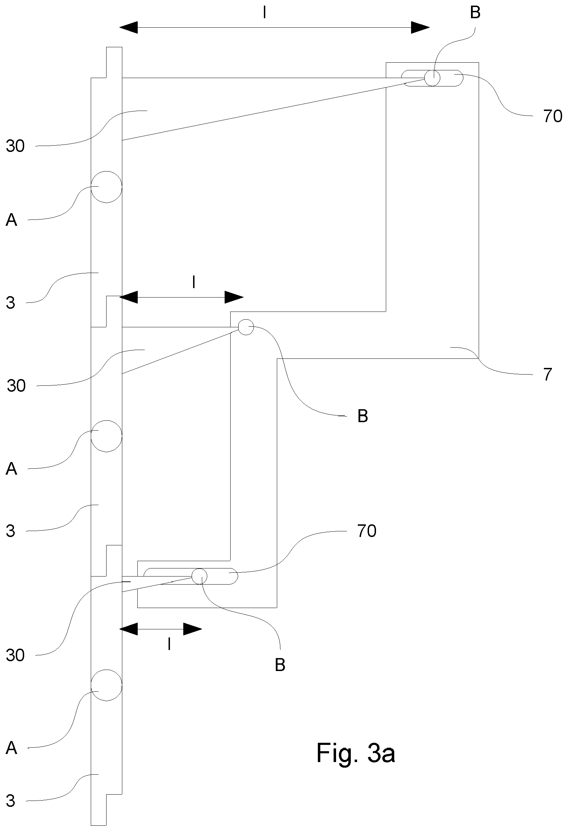

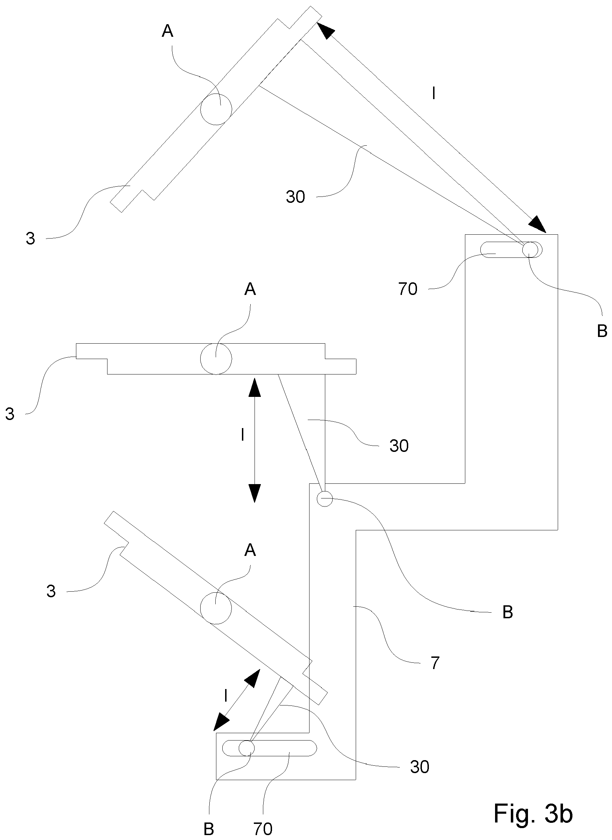

Les figures 3a et 3b montrent plus en détail en vue de côté, la liaison entre les volets 3 et la bielle 7 que ce soit en position de fermeture (figure 3a) ou en position d'ouverture (figure 3b). Sur ces figures 3a et 3b, on voit que la distance entre l'axe de pivotement A et l'axe de liaison B d'un premier volet 3 diffère de la distance entre l'axe de pivotement A et l'axe de liaison B d'au moins un second volet 3. De cette différence de distance, découle que pour un déplacement de la bielle 7 donné, la rotation du premier et d'au moins un second volets 3 est d'angle différent. Il est ainsi possible, en contrôlant la distance entre l'axe de pivotement A et l'axe de liaison B, de choisir un angle de rotation du volet 3 en position d'ouverture.

La différence de distance entre l'axe de pivotement A et l'axe de liaison B d'un premier volet 3 et la distance entre l'axe de pivotement A et l'axe de liaison B du au moins un second volet 3 est ici obtenue par une différence de la longueur L des bras de levier 30.

Les premier et au moins un second volets 3 forment un ensemble de volets 3 dont la rotation est commandée par une même bielle 7 et les axes de liaison B des volets 3 situés aux extrémités dudit ensemble de volets 3 sont en liaison avec ladite bielle 7 au niveau d'encoches 70 oblongues dans lesquelles lesdits axes de liaison B peuvent coulisser. Les encoches 70 oblongues peuvent être rectilignes et perpendiculaires au plan du volet 3 dontelles guident l'axe de liaison B, lorsque ce dernier est en position de fermeture.

Lors de la rotation des volets 3 par mouvement de la bielle 7, ce mouvement se fait selon une courbe de rayon égale à la distance entre les axes de pivotement A et les axes de liaison B, cependant ces distances étant différentes pour certains volets 3, les courbes de mouvement de la bielle 7 au niveau des volets 3 sont donc différentes, ce qui entraine des contraintes mécaniques. La présence de ces encoches 70 oblongues sur la bielle 7 permet d'éviter et de compenser ces contraintes mécaniques liées à la différence de distance entre les axes de pivotement A et les axes de liaison B des différents volets 3, lors des mouvements de la bielle 7 en donnant aux axes de liaison B un degré de liberté de mouvement.

Comme illustré sur la figure 3b, les volets 3 situés aux extrémités de l'ensemble de volets 3 sont, en position d'ouverture, inclinés par rapport au flux d'air, de sorte à rediriger l'air entrant dans le dispositif d'obturation 1 dans des directions divergentes par rapport à la direction d'un flux d'air entrant.

Dans l'exemple présenté par les figures 3a et 3b, l'ensemble de volets 3 comporte trois volets 3 et en position d'ouverture (figure 3b) le volet 3 central est parallèle à la direction du flux d'air entrant dans le dispositif d'obturation. En position de fermeture (figure 3a) les volets 3 formant l'ensemble de volets 3 bloquent le flux d'air entrant.

Les volets 3 peuvent avoir, comme montré dans l'exemple illustré par les différentes figures, leurs axes de pivotement A situés sur un même plan rectiligne et vertical. Cependant, sans sortir du cadre de l'invention, il est possible d'imaginer que le plan formé par les axes de pivotement A soit incliné ou encore que l'ensemble de volets 3 forment en position de fermeture une surface courbe avec un plan reliant les axes de pivotement A courbe.

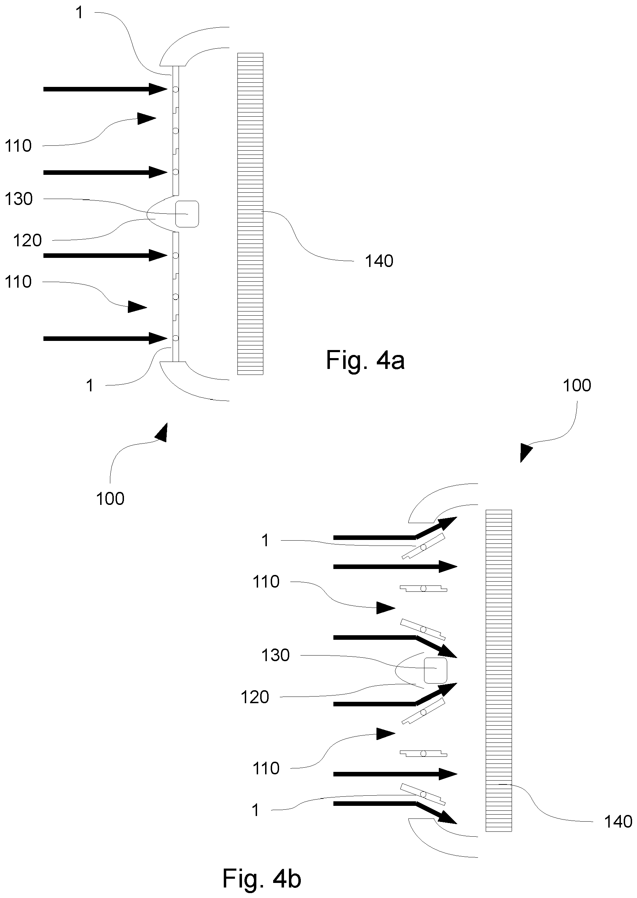

La présente invention concerne également une face avant 100 de véhicule, illustrée sur les figures 4a et 4b, comprenant au moins un dispositif d'obturation 1 comme décrit ci-dessus. Le au moins un dispositif d'obturation 1 peut être placé de sorte que les axes de pivotement A soient à l'horizontal, comme montré sur les figures 4a et 4b. Il est cependant tout a fait possible d'imaginer, sans sortir du cadre de l'invention, un ou plusieurs dispositifs d'obturation 1 placés de sorte que les axes de pivotement A soient à la verticale ou inclinés dans une quelconque direction afin de répondre par exemple à des conformations particulières de la face avant 100.

Les figures 4a et 4b montrent de coté, une face avant 100 de véhicule comprenant deux entrées d'air principale 110 chacune comportant un dispositif d'obturation 1. Les entrées d'air principales 110 sont séparées par un élément central 120, derrière lequel est présent une poutre pare-choc 130. Derrière la face avant 100 est également placé un échangeur de chaleur 140.

Le fait d'utiliser un ou plusieurs dispositifs d'obturation 1 comme décrit ci-dessus, permet de pouvoir rediriger une partie de l'air entrant dans la face avant 100 en jouant sur l'inclinaison de certains volets 3 en position d'ouverture et ainsi de le répartir sur toute la surface de la face avant 100, notamment afin d'amener l'air au niveau de zones faiblement alimentées en air, comme par exemple derrière l'élément central 120, entre le haut de la face avant 100 et le haut du dispositif d'obturation 1 ou encore entre le bas de la face avant 100 et le bas du dispositif d'obturation 1. Ainsi, l'ensemble de la surface à l'arrière de la face avant 100 est correctement alimentée en air, ce qui permet une meilleure efficacité de l'échangeur de chaleur 140.

Ainsi, on voit bien que grâce à la différence entre la distance entre l'axe de pivotement A et l'axe de liaison B du premier volet 3 et la distance entre l'axe de pivotement A et l'axe de liaison B du au moins un second volet 3, il est possible de définir une inclinaison individuelle des volets 3 en position d'ouverture selon les besoins et ainsi de rediriger l'air entrant dans le dispositif d'obturation 1 également selon les besoins. Il est ainsi possible d'obtenir une face avant 100 de véhicule automobile dont l'air entrant est également réparti et donc avoir un fonctionnement optimal du ou des échangeurs de chaleurs placés en aval du flux d'air.

## Revendications

1. Dispositif d'obturation (1) d'orifice en particulier pour entrée d'air de face avant de véhicule, comprenant :
- un cadre support (5),
- un premier volet (3) et au moins un second volet (3) à l'intérieur du cadre support (5), lesdits premier et au moins un second volets (3) étant montés pivotant autour d'un axe de pivotement (A) entre une position d'ouverture et une position de fermeture,
- au moins une bielle (7) de pivotement, lesdits premier et au moins un second volets (3) étant reliés à ladite bielle (7) au moyen d'un bras de levier (30) ayant un axe de liaison (B) avec ladite bielle (7),
la distance entre l'axe de pivotement (A) et l'axe de liaison (B) du premier volet (3) différant de la distance entre l'axe de pivotement (A) et l'axe de liaison (B) du au moins un second volet (3) de sorte qu'un déplacement de la bielle (7) entraine une rotation d'angle différent pour les premier et au moins un second volets (3), les premier et au moins un second volet (3) formant un ensemble de volets (3) et les axes de liaison (B) des volets (3) situés aux extrémités dudit ensemble de volets (3) sont en liaison avec la bielle (7) au niveau d'encoches (70) oblongues dans lesquelles lesdits axes de liaison (B) peuvent coulisser, **caractérisé en ce que** lesdites encoches (70) oblongues sont rectilignes et perpendiculaires au plan du volet (3) dont elles guident l'axe de liaison (B), en position de fermeture.

2. Dispositif d'obturation (1) selon la revendication précédente, **caractérisé en ce que** la différence de distance entre l'axe de rotation (A) et l'axe de liaison (B) des premier et au moins un second volet (3) est réalisée par une différence de longueur (1) des bras de levier (30).

3. Dispositif d'obturation (1) selon l'une des revendications précédentes, **caractérisé en ce qu'**en position d'ouverture, les volets (3) situés aux extrémités de l'ensemble de volets (3) sont inclinés de sorte à rediriger l'air selon des directions divergentes par rapport à la direction d'un flux d'air entrant.

4. Dispositif d'obturation (1) selon la revendication précédente, **caractérisé en ce que** l'ensemble de volets (3) comporte au moins trois volets (3) et qu'en position d'ouverture, le au moins un volet (3) central est parallèle à la direction d'un flux d'air entrant.

5. Face avant (100) de véhicule automobile comprenant au moins un dispositif d'obturation (1) selon l'une des revendications précédentes.

6. Face avant (100) de véhicule automobile selon la revendication précédente, **caractérisée en ce que** ladite face avant comporte au moins deux entrées d'air principales (110) séparées par un élément central (120) et que chaque entrée d'air principale (110) comporte un dispositif d'obturation (1).

## Patentansprüche

1. Vorrichtung zum Verschließen (1) einer Öffnung, insbesondere zum Eintritt von Luft, einer Fahrzeugvorderseite, umfassend:
- einen Stützrahmen (5),
- eine erste Klappe (3) und mindestens eine zweite Klappe (3) im Inneren des Stützrahmens (5), wobei die erste und die mindestens eine zweite Klappe (3) um eine Schwenkachse (A) zwischen einer Öffnungsposition und einer Schließposition schwenkbar angebracht sind,
- mindestens eine Schwenkstange (7), wobei die erste und die mindestens eine zweite Klappe (3) mit der Stange (7) mittels eines Hebelarmes (30) verbunden sind, der eine Verbindungsachse (B) mit der Stange (7) aufweist,
wobei sich der Abstand zwischen der Schwenkachse (A) und der Verbindungsachse (B) der ersten Klappe (3) vom Abstand zwischen der Schwenkachse (A) und der Verbindungsachse (B) der mindestens einen zweiten Klappe (3) unterscheidet, so dass eine Verlagerung der Stange (7) für die erste und die mindestens eine zweite Klappe eine Drehung um unterschiedliche Winkel zur Folge hat, wobei die erste und die mindestens eine zweite Klappe (3) eine Anordnung von Klappen (3) bilden und die Verbindungsachsen (B) der Klappen (3), die sich an den Enden der Anordnung von Klappen (3) befinden, mit der Stange (7) an länglichen Aussparungen (70) in Verbindung stehen, in welchen die Verbindungsachsen (B) gleiten können, **dadurch gekennzeichnet, dass** die länglichen Aussparungen (70) gerade und senkrecht zur Ebene der Klappe (3), deren Verbindungsachsen (B) sie führen, in der Schließposition sind.

2. Vorrichtung zum Verschließen (1) nach dem vorhergehenden Anspruch, **dadurch gekennzeichnet, dass** der bei der ersten und der mindestens einen zweiten Klappe (3) unterschiedliche Abstand zwischen der Drehachse (A) und der Verbindungsachse (B) durch einen Unterschied der Längen (1) der Hebelarme (30) bewirkt wird.

3. Vorrichtung zum Verschließen (1) nach einem der vorhergehenden Ansprüche, **dadurch gekennzeichnet, dass** in der Öffnungsposition die Klappen (3), die sich an den Enden der Anordnung von Klappen (3) befinden, geneigt sind, so dass sie die Luft in bezüglich der Richtung eines eintretenden Luftstroms abweichende Richtungen umlenken.

4. Vorrichtung zum Verschließen (1) nach dem vorhergehenden Anspruch, **dadurch gekennzeichnet, dass** die Anordnung von Klappen (3) mindestens drei Klappen (3) umfasst und dass in der Öffnungsposition die mindestens eine mittlere Klappe (3) parallel zur Richtung eines eintretenden Luftstroms ist.

5. Vorderseite (100) eines Kraftfahrzeugs, welche mindestens eine Vorrichtung zum Verschließen (1) nach einem der vorhergehenden Ansprüche umfasst.

6. Vorderseite (100) eines Kraftfahrzeugs nach dem vorhergehenden Anspruch, **dadurch gekennzeichnet, dass** die Vorderseite mindestens zwei Hauptlufteinlässe (110) aufweist, die durch ein zentrales Element (120) getrennt sind, und dass jeder Hauptlufteinlass (110) eine Vorrichtung zum Verschließen (1) aufweist.

## Claims

1. Device (1) for closing an opening in particular for an air inlet on the front side of a vehicle, comprising:
- a support frame (5),
- a first flap (3) and at least one second flap (3) inside the support frame (5), the said first and at least one second flaps (3) being mounted pivotably about a pivoting axis (A) between an open position and a closed position,
- at least one pivoting link-bar (7), the said first and at least one second flaps (3) being connected to the said link-bar (7) by means of a lever arm (30) having a pin (B) for connection with the said link-bar (7),
the distance between the pivoting axis (A) and the connection pin (B) of the first flap (3) being different from the distance between the pivoting axis (A) and the connection pin (B) of the at least one second flap (3), such that a displacement of the link-bar (7) causes a rotation with an angle which is different for the first and at least one second flaps (3), the first and at least one second flaps (3) forming a set of flaps (3) and the connection pins (B) of the flaps (3) situated at the ends of the said set of flaps (3) being connected to the link-bar (7) via oblong slots (70) inside which the said connection pins (B) are able to slide, **characterized in that** the said oblong slots (70) are rectilinear and perpendicular to the plane of the flap (3) whose connection pin (B) they guide, in the closed position.

2. Closing device (1) according to the preceding claim, **characterized in that** the difference in distance between the axis of rotation (A) and the connection pin (B) of the first and at least one second flaps (3) is achieved by means of a difference in the length (1) of the lever arms (30).

3. Closing device (1) according to either one of the preceding claims, **characterized in that** in the open position, the flaps (3) situated at the ends of the set of flaps (3) are inclined so as to redirect the air along directions diverging with respect to the direction of the incoming air flow.

4. Closing device (1) according to the preceding claim, **characterized in that** the set of flaps (3) comprises at least three flaps (3) and **in that**, in the open position, the at least one central flap (3) is parallel to the direction of an incoming air flow.

5. Front side (100) of a motor vehicle comprising at least one closing device (1) according to one of the preceding claims.

6. Front side (100) of a motor vehicle according to the preceding claim, **characterized in that** the said front side has at least two main air inlets (110) separated by a central element (120) and that each main air inlet (110) has a closing device (1).
